# EUROPEAN PATENT SPECIFICATION

(11) **EP 3 116 918 B1**
(45) Date of publication and mention of the grant of the patent: **03.04.2019**
(21) Application number: 15710036.3
(22) Date of filing: 25.02.2015
(51) Int. Cl.: C08F 2/10, C08F 8/50, C09C 1/30, C01B 33/18, C08F 271/02, C08G 77/04, C08G 77/02, C08G 77/26, B01J 13/04, B01J 13/20, C03B 19/10

(54) **PROCESS FOR PREPARING RECYCLABLE TEMPLATE HOLLOW PARTICLES USING SOLVENT-BASED SILICA PRECURSORS**
VERFAHREN ZUR HERSTELLUNG VON RECYCELBAREN VORLAGENHOHLPARTIKELN MITHILFE VON LÖSUNGSMITTELBASIERTEN KIESELSÄUREVORLÄUFERN
PROCEDE DE PREPARATION DE PARTICULES CREUSES DE GABARIT RECYCLABLES UTILISANT DES PRECURSEURS DE SILICE A BASE DE SOLVANT

(30) Priority: 11.03.2014 US 201461950861 P
(43) Date of publication of application: 18.01.2017
(73) Proprietor: The Chemours Company FC, LLC, Wilmington, DE 19899 (US)
(72) Inventor: LASIO, Jelena, Bel Air, Maryland 21015 (US); ROSEN, Brad M, Philadelphia, Pennsylvania 19146 (US); WHIPPLE, Devin T., Hockessin, Delaware 19707 (US); WOERNER, Francis J., Bear, Delaware 19701 (US)
(74) Representative: Dannenberger, Oliver Andre
(86) International application number: PCT/US2015/017428
(87) International publication number: WO 2015/138121

(56) References cited:
- WO-A1-2013/174753
- KR-A- 20120 056 337
- US-A1- 2007 036 736

## Description

### BACKGROUND OF THE DISCLOSURE

The present disclosure relates to a process for making hollow particles using a template approach, onto which a shell material is deposited, and the template material removed to generate the hollow particle. More particularly, the disclosure relates to a process in which the template material can be recycled.

Nano core/shell particles are submicroscopic colloidal systems composed of a solid or liquid core surrounded by a thin polymer or inorganic shell. This solid or liquid core is removed to form hollow nanospheres. Such core/shell systems may be prepared by deposition of the shell material onto a template particle, wherein the shell material can be either organic, inorganic, or hybrid. The selective removal of the core (template) material without disturbing the shell generates hollow particles.

In many cases where a template approach to hollow particles is used, the methods for removing the core are destructive. Typically, the template material is irreversibly changed, and cannot be used again. The most common ways of removing an organic template particle is calcination, whereupon the core material is burned. Alternatively, in the case of acid-labile metal carbonates (such as CaCO₃, for example), the core material can be dissolved in acid, generating a water-soluble metal salt and CO₂.

Therefore, a need exists to generate template-based methods for the preparation of hollow particle in which core materials can be recycled.

KR 2012 0056337 and US 2007/036736 each describe a method for making hollow silica particles. WO 2013/174753 describes a method of making hybrid organic-inorganic core-shell nano-particles.

### SUMMARY OF THE DISCLOSURE

In the first aspect, the disclosure provides a process for making hollow inorganic particles through a template approach, and allows for recycling of the template material. The process for preparing the hollow particles comprises:
(a) providing a recyclable template particle in an aqueous dispersion, wherein the recyclable template particle is prepared from an organic monomer;
(b) coating the recyclable template particle with a solvent based silica precursor such as tetraethyl orthosilicate (TEOS), tetramethyl orthosilicate (TMOS) tetrapropyl orthosilicate (TPOS), tetrabutyl orthosilicate (TBOS), tetrahexyl orthosilicate, diethoxydimethylsilane, ethoxytrimethylsilane, methoxytrimethylsilane, trimethoxy(octyl)silane, triethoxy(octyl)silane, methoxy(dimethyl)octylsilane, or 3-aminopropyl-(diethoxy)methylsilane, or siloxanes having the general formula RSi(OR)₃, R₁R₂Si(OR)₂, or R₁R₂R₃SiOR, wherein R, R₁, R₂, and R₃ can be alkyl of about 1 to about 20 carbon atoms, more typically about 2 to about 10 carbon atoms, aryl groups of about 6 to about 10 carbon atoms, more typically about 6 to about 8 carbon atoms or combinations thereof; more typically tetraethyl orthosilicate (TEOS) or tetrapropyl orthosilicate (TPOS);
(c) maintaining the pH at about 7 to about 10 to form core/shell particles comprising a silica treatment on the recyclable template particle;
(d) removing the core/shell particles; and
(e) removing the recyclable template particle from the core/shell particles by depolymerization through thermal depolymerization, acid hydrolysis or base hydrolysis to form a hollow silica particle, and
(f) recycling the organic monomer after depolymerization of the recyclable template particle.

Typically the recyclable template particle, which may be a solid particle or a hollow particle, is removed by thermal depolymerization, typically by heating at temperatures of about 60°C to about 500°C, or by acid or base.

### BRIEF DESCRIPTION OF THE FIGURES

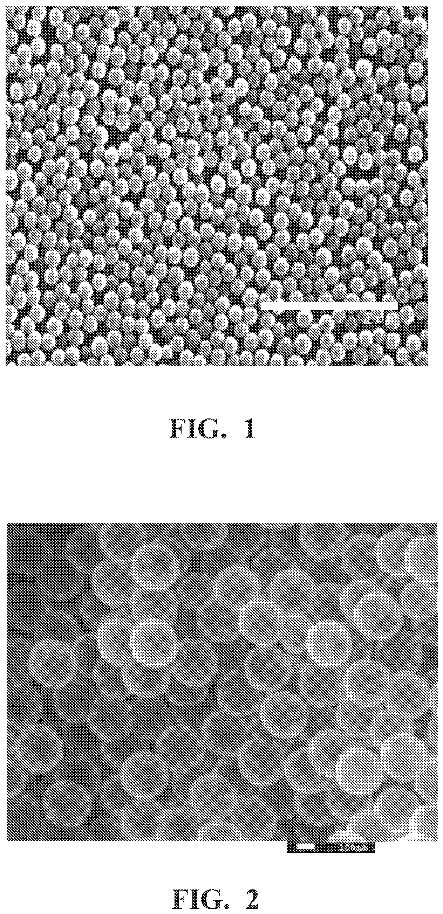

Figure 1 shows SEM image of the polystyrene particles obtained in Example 1.
Figure 2 shows SEM image of the hollow silica particles obtained from polystyrene@silica core/shell particles, from Example 4

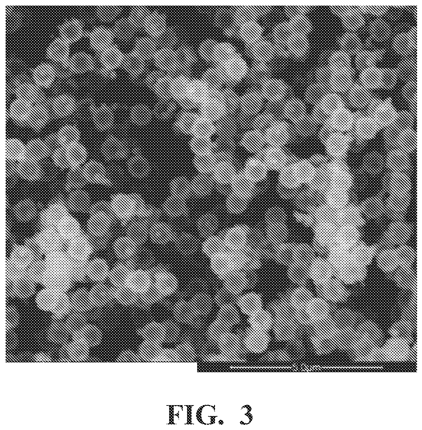

Figure 3 shows SEM image of the hollow silica particles obtained from PMMA@silica core/shell particles, from Example 5.

### DETAILED DESCRIPTION OF THE DISCLOSURE

In this disclosure "comprising" is to be interpreted as specifying the presence of the stated features, integers, steps, or components as referred to, but does not preclude the presence or addition of one or more features, integers, steps, or components, or groups thereof. Additionally, the term "comprising" is intended to include examples encompassed by the terms "consisting essentially of" and "consisting of." Similarly, the term "consisting essentially of" is intended to include examples encompassed by the term "consisting of."

In this disclosure, when an amount, concentration, or other value or parameter is given as either a range, typical range, or a list of upper typical values and lower typical values, this is to be understood as specifically disclosing all ranges formed from any pair of any upper range limit or typical value and any lower range limit or typical value, regardless of whether ranges are separately disclosed. Where a range of numerical values is recited herein, unless otherwise stated, the range is intended to include the endpoints thereof, and all integers and fractions within the range. It is not intended that the scope of the disclosure be limited to the specific values recited when defining a range.

In this disclosure, terms in the singular and the singular forms "a," "an," and "the," for example, include plural referents unless the content clearly dictates otherwise. Thus, for example, reference to "hollow particle", "the hollow particle", or "a hollow particle" also includes a plurality of hollow particles.

This disclosure provides a process for preparing the hollow inorganic particles, through intermediacy of template particles, onto which the shell material is deposited, to generate core/shell particles. The template particle constituting the core material, that may be a solid or hollow particle, is removed to generate hollow inorganic particles. This process details the method for generating hollow particles through non-destructive core removal, thereby allowing core material recycling.

The particles described herein are between about a 100 to about 900nm in size, more typically between about 150 and about 800nm, and still more typically between about 230 and about 700nm. The disclosure provides the process for making hollow particles through a template approach in which template material is isolable and recyclable.

The process for preparing the hollow particles comprises:
(a) providing a recyclable template particle in an aqueous dispersion, wherein the recyclable template particle is prepared from an organic monomer;
(b) coating the recyclable template particle with a solvent based silica precursor such as tetraethyl orthosilicate (TEOS), tetramethyl orthosilicate (TMOS) tetrapropyl orthosilicate (TPOS), tetrabutyl orthosilicate (TBOS), tetrahexyl orthosilicate, diethoxydimethylsilane, ethoxytrimethylsilane, methoxytrimethylsilane, trimethoxy(octyl)silane, triethoxy(octyl)silane, methoxy(dimethyl)octylsilane, or 3-aminopropyl-(diethoxy)methylsilane, or siloxanes having the general formula RSi(OR)₃, R₁R₂Si(OR)₂, or R₁R₂R₃SiOR, wherein R, R₁, R₂, and R₃ can be alkyl of about 1 to about 20 carbon atoms, more typically about 2 to about 10 carbon atoms, aryl groups of about 6 to about 10 carbon atoms, more typically about 6 to about 8 carbon atoms or combinations thereof; more typically tetraethyl orthosilicate (TEOS) or tetrapropyl orthosilicate (TPOS);
(c) maintaining the pH at about 7 to about 10 to form core/shell particles comprising a silica treatment on the recyclable template particle;
(d) removing the core/shell particles; and
(e) removing the recyclable template particle from the core/shell particles by depolymerization through thermal depolymerization, acid hydrolysis or base hydrolysis to form a hollow silica particle, and
(f) recycling the organic monomer after depolymerization of the recyclable template particle.

Typically the recyclable template particle, that may be a solid particle or a hollow particle, is removed by thermal depolymerization, typically by heating at temperatures of about 60°C to about 500°C, or by acid or base hydrolysis.

The recyclable template particle or core is prepared using typically an organic monomer which is polymerized to generate template particles. Some monomes for the template include styrene, methyl methacrylate, α-methylstyrene, lactic acid, or formaldehyde, more typically methyl methacrylate, lactic acid, or α-methylstyrene, and still more typically methyl methacrylate or α-methylstyrene. Similarly, a group of two monomers can be chosen for a copolymerization, such as a variety of diacids and dialcohols for polyester polymers (like polyethylene terephthalate, PET), diacids and diamides for various polyamides (like Nylon 6, or other Nylons), etc. The monomers are present in the amount of about 1 to about 60wt%, more typically about 2 to about 50wt%, still more typically about 5 to about 40wt%, based on the total weight of the components used in the preparation of the recyclable template particle. Typically, the particle size of the template is tunable, and the particle size distribution of the template particles achieved is narrow, which is advantageous. For example, preparation of the recyclable template particle or core by emulsion polymerization is achieved by emulsification of the water-insoluble monomer or a monomer mixture in water, and polymerized using radical or photopolymerization conditions. Radical initiators such as potassium- or ammonium persulfate, and 2,2-azobis(2-methylpropionamidine) hydrochloride (AIBA) can be used, more typically AIBA. Surfactant can also typically be used. Some examples of suitable surfactants include sodium dodecylsulfate (SDS), cetyltrimethylammonium bromide (CTAB), poly-(vinylpyrrolidinone) PVP, etc. In some cases, it might be advantageous to use copolymers in order to introduce charge on the surface of the particle, like for example vinyltimethylammonium chloride benzene, 2-(methacryloxy)ethyltrimethylammonium chloride, etc. In cases where silica is deposited onto the template surface, it might be beneficial to use a copolymer with a silyl group, to promote the silica deposition on the particle surface like for instance 3-(trimethoxysilyl)propylmethacrylate, or other silyl-containing monomers. In some cases, it might be preferable to use comonomers that can crosslink two growing polymer chains, thereby strengthening the template particle-some of those materials include divinylbenzene or ethylene glycol dimethacrylate. In order to perform the polymerization, the reaction temperature is kept between about 0°C and about 100°C, more typically about 15 to about 90°C, still more typically about 25°C to about 70°C.

By aqueous monomer dispersion we mean water or a mixture of water and surfactant, initiator, defoaming agent, or a suitable buffer in cases where pH needs to be kept in a particular range.

The recyclable template particle or core is then coated with a shell material to generate a core/shell particle. To generate a silica treatment comprising a coating, layer or shell, at least one solvent-based silica precursor is used. Some examples of solvent-based silica precursors include tetraethyl orthosilicate (TEOS), tetramethyl orthosilicate (TMOS) tetrapropyl orthosilicate (TPOS), tetrabutyl orthosilicate (TBOS), tetrahexyl orthosilicate, diethoxydimethylsilane, ethoxytrimethylsilane, methoxytrimethylsilane, trimethoxy(octyl)silane, triethoxy(octyl)silane, methoxy(dimethyl)octylsilane, or 3-aminopropyl-(diethoxy)methylsilane, or siloxanes having general formula RSi(OR)₃, R₁R₂Si(OR)₂, or R₁R₂R₃SiOR, wherein R, R₁, R₂, and R₃, can be any of a variety of alkyl or aryl groups; more typically tetraethyl orthosilicate (TEOS) or tetrapropyl orthosilicate (TPOS). When using organic siloxanes, the reaction is typically done in a dilute ethanol/water ammonia solution, with or without sonication. Typically, the suspension of recyclable template particles in dilute ethanol/water solution of ammonia is treated with the solvent based silica precursor, which results in silica deposition on the recyclable template particles, generating core shell particles.

The pH is maintained at about 7 to about 10, more typically about 8 to about 10 to form core/shell particles comprising a silica treatment that may be a layer or coating on the recyclable template particle and the reaction times are held between about 1 to about 24 hours, more typically about 1.5 to about 18 hours, still more typically about 2 to about 12 hours. This results in the deposition of a silica treatment or shell on the recyclable template particle or core.

The core/shell particles are removed from the aqueous solution by centrifugation or filtration, more typically by centrifugation.

Depending on the nature of the recyclable template particle, the recyclable template particle that constitutes the core can be recycled either through thermal depolymerization, or acid- or base hydrolysis. Typically, core materials made out of poly-(α-methylstyrene), PMMA, various polyamides, as well as styrene are depolymerized at increased temperatures, with the temperatures of depolymerization varying with the polymer used. Some suitable temperature ranges include about 250 to about 450°C, more typically about 275 to about 400°C, still more typically from about 290 to about 325°C, to generate hollow particles as well as core monomer. For example, poly(methylmethacrylate)@silica core/shell particles can be heated above around about 300°C to generate methyl methacrylate monomer and hollow silica particles. Further, poly(α-methylstyrene)@silica can be heated to about above 60°C to generate hollow silica particles and α-methylstyrene monomer.

Alternatively, acid- or base-labile core materials can be hydrolyzed instead of thermally depolymerized to generate hollow particles with possibility of monomer recycling. Polymers such as Delrin® (polyacetal), poly(lactic acid), as well as other polyesters can be depolymerized through acid hydrolysis. For example, treating polyacetal@silica with acid should generate hollow silica as well as aldehyde monomer that can be recycled in template particle synthesis. Similarly, polyesters or polyamides from core/shell particles can be recycled in the same fashion to generate diacid/dialcohol (diacid/diamine) monomer couples as well as hydroxylic or amino acids as monomers (like in the case of polylactic acid, for example).

These depolymerization methods allow for hollow particle formation, as well as, being non-destructive toward core monomers, allowing for template material recycling.

### Applications:

These inorganic hollow particle dispersions are useful as hiding or opacifying agents in coating and molding compositions. They are also useful as drug delivery systems in the pharmaceutical and medical industries; in food, personal care and cosmetics; and agriculture.

### EXAMPLES

### Example 1: Preparation of polystyrene recyclable template particle

To a 250mL three-neck round bottom flask, equipped with a mechanical stirrer, thermometer, and a reflux condenser, was added styrene (13mL, 113.5 mmol), polyvinylpyrrolidone, PVP (500mg), and 100mL of degassed water. The resulting mixture was stirred at room temperature for 15min. The mixture was degassed by bubbling nitrogen for 20min. To the reaction mixture was then added a degassed solution of 2,2-azobis(2-methylpropionamidine) hydrochloride, AIBA (300mg, 1.1 mmol) in 20mL water, and the reaction was started by heating to 70°C overnight. Particle size analysis of the resulting suspension revealed particles with average particle size of 250nm.

### Example 2: Preparation of PMMA recyclable template particle

To a three-necked 250mL round bottom flask with 100.0 mL water was added methyl methacrylate (9.5g, 94.89mmol), 2-(methacryloxy)ethyltrimethylammonium chloride (0.125g of 80% aqueous solution, mmol), ethylene glycol dimethacrylate (0.4g, mmol), and AIBA (0.1g, mmol). Trimethoxysilyl propyl methacrylate (0.5 g 2.01 mmol) was then added. The mixture was degassed by purging N₂ for 10min, and then heated to 70°C under nitrogen overnight. The white suspension was filtered through a cotton plug, and used in the core/shell particle synthesis described in Example 3.

### Example 3A: Core/shell particle formation

To a 2L Erlenmeyer flask was added 20mL of the solution from Example 1, and diluted with 80 mL of water. To this was added 700 mL EtOH, followed by 20mL of NH₄OH (add concentration). The Erlenmeyer flask was placed inside the sonicating bath, and the sonication was started. Then, tetraethoxysilane (2mL, 9.04mmol) was added via a syringe pump at a rate of 6mL/h. After the addition was complete, the mixture was sonicated for an additional hour.

The resulting suspension was concentrated to remove ethanol, and resulting material was centrifuged (8000 rpm) to isolate the solids. The solids were washed with ethanol twice to yield the core/shell particles material.

### Example 3B: Core/shell particle formation

To a 2L Erlenmeyer flask was added 20mL of the solution from Example 2, and diluted with 80 mL of water. To this was added 700 mL EtOH, followed by 20mL of NH₄OH (add concentration). The Erlenmeyer flask was placed inside the sonicating bath, and the sonication was started. Then, tetraethoxysilane (2mL, 9.04mmol) was added via a syringe pump at a rate of 6mL/h. After the addition was complete, the mixture was sonicated for an additional hour.

The resulting suspension was concentrated to remove ethanol, and resulting material centrifuged (8000 rpm) to isolate the solids. The solids were washed with ethanol twice to yield 2.15 g of the core/shell particles. TGA analysis of the material revealed that the material was composed of 67% organic core and 33% silica shell.

### Example 4: Removal of the core (calcination)

Material from Example 3A is placed in a tube furnace and calcined at 500°C (room temperature-500°C at 1°C/min), then 5h at 500°C, and is expected to generate 1.96g of hollow silica particles.

### Example 5: Removal of the PMMA core (thermal depolymerization)

Material from Example 3B (1.9g) was placed inside a 50mL round bottom flask, and the flask was placed inside a bulb-to-bulb distillation apparatus. The material was heated to 300°C under nitrogen, and the distillate was collected in the cooled (-20°C) receiving adapter. 890mg (77%) of MMA monomer were obtained as a clear liquid, as determined by GC and NMR analysis. The remaining brown residue (623 mg) was calcined as described in Example 4 to generate 615 mg of white powder, whose SEM revealed a hollow particle structure.

## Claims

1. A process for making hollow inorganic particles comprising:
(a) providing a recyclable template particle in an aqueous dispersion, wherein the recyclable template particle is prepared from an organic monomer;
(b) coating the recyclable template particle with a solvent based silica precursor;
(c) maintaining the pH at about 7 to about 10 to form core/shell particles comprising a silica treatment on the recyclable template particle;
(d) removing the core/shell particles;
(e) removing the recyclable template particle from the core/shell particles by depolymerization through thermal depolymerization, acid hydrolysis or base hydrolysis to form a hollow silica particle, and
(f) recycling the organic monomer after depolymerization of the recyclable template particle.

2. The process of claim 1 wherein the recyclable template particle is a solid particle.

3. The process of claim 1 wherein the recyclable template particle is a hollow particle.

4. The process of claim 1, 2, or 3 wherein the solvent based silica precursor is tetraethyl orthosilicate (TEOS), tetramethyl orthosilicate (TMOS) tetrapropyl orthosilicate (TPOS), tetrabutyl orthosilicate (TBOS), tetrahexyl orthosilicate, diethoxydimethylsilane, ethoxytrimethylsilane, methoxytrimethylsilane, trimethoxy(octyl)silane, triethoxy(octyl)silane, methoxy(dimethyl)octylsilane, or 3-aminopropyl-(diethoxy)methylsilane or siloxanes with general formula RSi(OR)₃, R₁R₂Si(OR)₂, or R₁R₂R₃SiOR, wherein R, R₁, R₂, and R₃ are alkyl groups of about 1 to about 20 carbon atoms, aryl groups of about 6 to about 10 carbon atoms, or combinations thereof.

5. The process of claim 4 wherein the solvent based silica precursor is tetraethyl orthosilicate (TEOS) or tetrapropyl orthosilicate (TPOS).

6. The process of any one of claims 1 to 5 wherein the recyclable template particle comprises poly-(methylmethacrylate), poly-(alphamethylstyrene), polyamide or polystyrene.

7. The process of claim 6 wherein the recyclable template particle comprising a silica treatment is heated to promote depolymerization.

8. The process of claim 7 wherein the thermal depolymerization occurs at temperatures of about 50°C to about 600°C, preferably at temperatures of about 250°C to about 450°C, more preferably at temperatures of about 275°C to about 400°C, still more preferably at temperatures of about 290°C to about 325°C.

9. The process of any one of claims 1 to 5 wherein the recyclable template particle comprises polyamide, polyacetal, poly(lactic acid) or polyester.

10. The process of claim 9 wherein the recyclable template particle comprising a silica treatment is treated with acid.

11. The process of any one of claims 1 to 10 wherein the particle formed is about 100 nm to about 900 nm in size.

12. The process of any one of claims 1 to 11 wherein the organic monomer comprises styrene, methyl methacrylate, α-methylstyrene, lactic acid, formaldehyde, aminoacids, hydroxyacids, diacids and dialcohols, or diacids and diamines.

13. The process of any one of claims 1 to 12 wherein the pH is maintained at about 8 to about 10.

## Patentansprüche

1. Verfahren zur Fertigung von anorganischen Hohlpartikeln, umfassend:
(a) das Bereitstellen eines recycelbaren Vorlagenpartikels in einer wässrigen Dispersion, wobei das recycelbare Vorlagenpartikel aus einem organischen Monomer hergestellt wird;
(b) das Beschichten des recycelbaren Vorlagenpartikels mit einem Siliciumdioxidvorläufer auf Lösungsmittelbasis;
(c) das Halten des pH-Werts bei etwa 7 bis etwa 10, um Kern-/Mantelpartikel zu bilden, umfassend eine Siliciumdioxidbehandlung auf dem recycelbaren Vorlagenpartikel;
(d) das Entfernen der Kern-/Mantelpartikels;
(e) das Entfernen des recycelbaren Vorlagenpartikels von den Kern-/Mantelpartikeln durch Entpolymerisation durch thermische Entpolymerisation, saure Hydrolyse oder Basenhydrolyse, um ein Siliciumdioxidhohlpartikel zu bilden, und
(f) das Recyceln des organischen Monomers nach der Entpolymerisation des recycelbaren Vorlagenpartikels.

2. Verfahren nach Anspruch 1, wobei das recycelbare Vorlagenpartikel ein festes Partikel ist.

3. Verfahren nach Anspruch 1, wobei das recycelbare Vorlagenpartikel ein Hohlpartikel ist.

4. Verfahren nach Anspruch 1, 2 oder 3, wobei der Siliciumdioxidvorläufer auf Lösungsmittelbasis Tetraethylorthosilicat (TEOS), Tetramethylorthosilicat (TMOS), Tetrapropylorthosilicat (TPOS), Tetrabutylorthosilicat (TBOS), Tetrahexylorthosilicat, Diethoxydimethylsilan, Ethoxytrimethylsilan, Methoxytrimethylsilan, Trimethoxy(octyl)silan, Triethoxy(octyl)silan, Methoxy(dimethyl)octylsilan oder 3-Aminopropyl(diethoxy)methylsilan oder Siloxane mit der allgemeinen Formel RSi(OR)₃, R₁R₂Si(OR)₂ oder R₁R₂R₃SiOR ist, wobei R, R₁, R₂ und R₃ Alkylgruppen von etwa 1 bis etwa 20 Kohlenstoffatomen, Arylgruppen von etwa 6 bis etwa 10 Kohlenstoffatomen oder Kombinationen davon sind.

5. Verfahren nach Anspruch 4, wobei der Siliciumdioxidvorläufer auf Lösungsmittelbasis Tetraethylorthosilicat (TEOS) oder Tetrapropylorthosilicat (TPOS) ist.

6. Verfahren nach einem der Ansprüche 1 bis 5, wobei das recycelbare Vorlagenpartikel Poly(methylmethacrylat), Poly(alpha-methylstyrol), Polyamid oder Polystyrol umfasst.

7. Verfahren nach Anspruch 6, wobei das recycelbare Vorlagenpartikel, das eine Siliciumdioxidbehandlung umfasst, erhitzt wird, um die Entpolymerisation zu unterstützen.

8. Verfahren nach Anspruch 7, wobei die thermische Entpolymerisation bei Temperaturen von etwa 50 °C bis etwa 600 °C, bevorzugt bei Temperaturen von etwa 250 °C bis etwa 450 °C, noch bevorzugter bei Temperaturen von etwa 275 °C bis etwa 400 °C, sogar noch bevorzugter bei Temperaturen von etwa 290 °C bis etwa 325 °C erfolgt.

9. Verfahren nach einem der Ansprüche 1 bis 5, wobei das recycelbare Vorlagenpartikel Polyamid, Polyacetal, Poly(milchsäure) oder Polyester umfasst.

10. Verfahren nach Anspruch 9, wobei das recycelbare Vorlagenpartikel, das eine Siliciumdioxidbehandlung umfasst, mit Säure behandelt wird.

11. Verfahren nach einem der Ansprüche 1 bis 10, wobei das gebildete Partikel größenmäßig etwa 100 nm bis etwa 900 nm beträgt.

12. Verfahren nach einem der Ansprüche 1 bis 11, wobei das organische Monomer Styrol, Methylmethacrylat, α-Methylstyrol, Milchsäure, Formaldehyd, Aminosäuren, Hydroxysäuren, Disäuren und Dialkohole oder Disäuren und Diamine umfasst.

13. Verfahren nach einem der Ansprüche 1 bis 12, wobei der pH-Wert bei etwa 8 bis etwa 10 gehalten wird.

## Revendications

1. Procédé de fabrication de particules inorganiques creuses comprenant:
(a) la fourniture d'une particule matrice recyclable dans une dispersion aqueuse, la particule matrice recyclable étant préparée à partir d'un monomère organique;
(b) l'enrobage de la particule matrice recyclable avec un précurseur de silice à base de solvant;
(c) le maintien du pH à environ 7 à environ 10 pour former des particules à coeur/écorce comprenant un traitement de silice sur la particule matrice recyclable;
(d) l'élimination des particules à coeur/écorce;
(e) l'élimination de la particule matrice recyclable des particules à coeur/écorce par dépolymérisation par l'intermédiaire de la dépolymérisation thermique, l'hydrolyse acide ou l'hydrolyse basique pour former une particule de silice creuse, et
(f) le recyclage du monomère organique après la dépolymérisation de la particule matrice recyclable.

2. Procédé selon la revendication 1, la particule matrice recyclable étant une particule solide.

3. Procédé selon la revendication 1, la particule matrice recyclable étant une particule creuse.

4. Procédé selon la revendication 1, 2, ou 3, le précurseur de silice à base de solvant étant l'orthosilicate de tétraéthyle (TEOS), l'orthosilicate de tétraméthyle (TMOS), l'orthosilicate de tétrapropyle (TPOS), l'orthosilicate de tétrabutyle (TBOS), l'orthosilicate de tétrahexyle, le diéthoxydiméthylsilane, l'éthoxytriméthylsilane, le méthoxytriméthylsilane, le triméthoxy(octyl)silane, le triéthoxy(octyl)silane, le méthoxy(diméthyl)octylsilane, ou le 3-aminopropyl-(diéthoxy)méthylsilane ou les siloxanes de formule générale RSi(OR)₃, R₁R₂Si(OR)₂, ou R₁R₂R₃SiOR, R, R₁, R₂, et R₃ étant des groupes alkyle d'environ 1 à environ 20 atomes de carbone, des groupes aryle d'environ 6 à environ 10 atomes de carbone, ou leurs combinaisons.

5. Procédé selon la revendication 4, le précurseur de silice à base de solvant étant l'orthosilicate de tétraéthyle (TEOS) ou l'orthosilicate de tétrapropyle (TPOS).

6. Procédé selon l'une quelconque des revendications 1 à 5, la particule matrice recyclable comprenant du poly-(méthylméthacrylate), du poly-(alphaméthylstyrène), du polyamide ou du polystyrène.

7. Procédé selon la revendication 6, la particule matrice recyclable comprenant un traitement de silice étant chauffée pour favoriser la dépolymérisation.

8. Procédé selon la revendication 7, la dépolymérisation thermique se produisant aux températures d'environ 50°C à environ 600°C, préférablement aux températures d'environ 250°C à environ 450°C, plus préférablement aux températures d'environ 275°C à environ 400°C, encore plus préférablement aux températures d'environ 290°C à environ 325°C.

9. Procédé selon l'une quelconque des revendications 1 à 5, la particule matrice recyclable comprenant du polyamide, du polyacétal, du poly(acide lactique) ou du polyester.

10. Procédé selon la revendication 9, la particule matrice recyclable comprenant un traitement de silice étant traitée avec de l'acide.

11. Procédé selon l'une quelconque des revendications 1 à 10, la particule formée étant d'environ 100 nm à environ 900 nm de taille.

12. Procédé selon l'une quelconque des revendications 1 à 11, le monomère organique comprenant du styrène, du méthacrylate de méthyle, de l'α-méthylstyrène, de l'acide lactique, du formaldéhyde, des acides aminés, des hydroxyacides, des diacides et des dialcools, ou des diacides et des diamines.

13. Procédé selon l'une quelconque des revendications 1 à 12, le pH étant maintenu à environ 8 à environ 10.
